# EUROPÄISCHE PATENTANMELDUNG

(11) **EP 3 614 299 A1**
(43) Veröffentlichungstag der Anmeldung: **26.02.2020**
(21) Anmeldenummer: 18190055.6
(22) Anmeldetag: 21.08.2018
(51) Int. Cl.: G06K 9/00, H02G 1/02, G06T 7/70

(54) **VERFAHREN UND ANORDNUNG ZUM ERKENNEN VON OBJEKTEN AN ANLAGEN**

(71) Anmelder: Siemens Aktiengesellschaft, 80333 München (DE)
(72) Erfinder: Birchbauer, Josef Alois, 8054 Seiersberg (AT); Comanelea-Serban, Vlad, 500281 Brasov (RO); Kähler, Olaf, 8052 Graz (AT)

(57) **Zusammenfassung**

Gegenstand der vorliegenden Erfindung ist ein Verfahren zum Erkennen von Objekten an Anlagen, mit den Schritten:
- Bereitstellen einer dreidimensionalen Darstellung der Anlage, wobei die Position und Ausrichtung der Darstellung und der Anlage bekannt sind, und
- Erfassen eines ersten Bildes und eines zweiten Bildes der Anlage, wobei die beiden Bilder von unterschiedlichen Positionen oberhalb der Anlage aufgenommen werden,
dadurch gekennzeichnet, dass
für eine Vielzahl von Abschnitten der Anlage unter Ausnutzung eines Parallaxeneffekts jeweils ein Vergleich des ersten und des zweiten Bildes durchgeführt wird, wobei
für den Fall einer Übereinstimmung der Bilder in einem die Anlage umgebenden Bereich ein Objekt an der Anlage erkannt wird.

Ferner ist Gegenstand der Erfindung eine entsprechende Anordnung.

## Beschreibung

Die Erfindung betrifft ein Verfahren gemäß dem Oberbegriff des Anspruchs 1 sowie eine Anordnung gemäß dem Oberbegriff des Anspruchs 10.

Die bisher unveröffentlichte europäische Patentanmeldung 17161027.2 vom 15.03.2017 mit dem Titel "Verfahren und Anordnung für eine Zustandsüberwachung einer Anlage mit Betriebsmitteln" offenbart ein Verfahren für eine Zustandsüberwachung einer Anlage mit Betriebsmitteln, bei dem mittels eines ersten Fahrzeugs mit einer Überblickssensoranordnung zur optischen Erfassung der Anlage Überblicksdaten erfasst werden, und
mittels einer Auswerteeinrichtung in den Überblicksdaten die Betriebsmittel erkannt und unter Berücksichtigung der Position des ersten Fahrzeugs die Positionen der Betriebsmittel bestimmt werden, wobei mittels eines zweiten Fahrzeugs mit einer Detailkamera, die auf die jeweiligen Positionen der Betriebsmittel ausgerichtet wird, Detailaufnahmen der Betriebsmittel erzeugt werden. Beispielsweise wird nur ein einziges Fluggerät wie z.B. eine Drohne oder ein Hubschrauber eingesetzt, um bei einem Überflug einer Freileitung mittels der Überblickskamera Masten und Isolatoren zu erkennen, die Position der Isolatoren zu bestimmen und anschließend mittels der Detailkamera hochaufgelöste Bilder der Isolatoren zu gewinnen. Hierdurch können schadhafte Isolatoren einfach und sicher erkannt werden.

Aus dem Stand der Technik sind zahlreiche Detektionsverfahren in Bildern bekannt. Insbesondere Objektdetektion in zweidimensionalen (2D) Bildern erhält dabei in letzter Zeit vermehrt Aufmerksamkeit. Aber auch klassische Detektionen z.B. in Thermographiebildern oder UV Bildern sind im ständigen industriellen Einsatz anzutreffen. Ebenso finden sich zahlreiche weitere 2D Detektionsverfahren, z.B. basierend auf Anomalien oder auch auf Farbunterschieden. Während der Großteil der bisherigen Arbeiten sich auf 2D Detektionen beschränkt, gibt es nur wenige Arbeiten, die versuchen, Detektionen in einen dreidimensionalen (3D) Raum zu überführen.

Bekannt ist beispielsweise die Veröffentlichung "Probabilistic Integration of Cues From Multiple Cameras" von J. Denzlerl et al., die sich mit der Integration von Bildaufnahmen verschiedener Kameras beschäftigt. Aus den Veröffentlichungen "Faster R-CNN: Towards Real-Time Object Detection with Region Proposal Networks" von Shaoqing Ren et al., "SSD: Single Shot MultiBox Detector" von Wei Liu et al. und "Using Histograms to Detect and Track Objects in Color Video" von Michael Mason et al., 2001, sind Verfahren zur Objekterkennung in Bilddaten bekannt. Die Veröffentlichung "Anomaly Detection: A Survey" von Varun Chandola et al., ACM Computing Surveys, 2009, beschäftigt sich mit dem Erkennen von Abweichungen von erwarteten Mustern in Daten.

Ferner ist die Doktorarbeit "Improving Object Detection using 3D Spatial Relationships" von Tristram Southey, MSc., University of British Columbia, 2013, bekannt. Es wird eine dreidimensionale Bildanalyse beschrieben.

Bei der Inspektion von Anlagen wie z.B. Freileitungen werden bisher Überflüge mit Helikoptern und Bildaufzeichnungen eingesetzt, um Schäden oder Objekte auf der Freileitung zu erkennen. Die Entscheidung, ob ein Objekt wie z.B. ein Vogelnest, ein Ballon oder ein Flugdrachen (Kinderspielzeug) auf den Leiterseilen liegt oder darunter am Boden, ist bei einer reinen Luftaufnahme schwer zu treffen und fehleranfällig. Bisher erfolgt dies in der Regel durch eine manuelle Auswertung der Bildaufnahmen. Werden Objekte auf der Leitung fälschlicherweise erkannt, so entstehen für eine ausgelöste Wartung entsprechend nutzlose Kosten und Aufwände.

Detektionen in einer oder mehreren Bildaufnahmen können nicht immer eindeutig einem bestimmten 3D Objekt zugeordnet werden. Da die einzelnen 2D Bilder keine Tiefeninformation enthalten, kann die Entfernung zu einem Objekt entlang des Sehstrahles nicht bestimmt werden. Somit können Detektionen auch nicht auf die relevanten Bereiche des 3D Raumes eingeschränkt werden, was mitunter zu irrelevanten Fehldetektionen führt. Sollen etwa Objekte auf einer Freileitung von Objekten unter der Freileitung unterschieden werden, so ist das durch automatisierte Bildbewertung auf Luftaufnahmen (Vogelperspektive) nicht trivial möglich.

An die Erfindung stellt sich die Aufgabe, ein Verfahren anzugeben, mit dem Objekte an Anlagen automatisch und zuverlässig erkannt werden können.

Die Erfindung löst diese Aufgabe mit einem Verfahren gemäß Anspruch 1.

Erfindungsgemäß wird das Problem der Objekterkennung dadurch gelöst, dass die mit den jeweiligen 2D Punkten assoziierte 3D Information genutzt wird. Bedingt durch den Parallaxeneffekt werden Objekte unter der Anlage wie z.B. einer Freileitung in den Bildern an unterschiedlichen Stellen in Relation zur Leitung abgebildet. Ein Parallaxeneffekt entsteht, wenn ein Beobachter seine eigene Position verschiebt und dadurch eine scheinbare Änderung der Position eines Objektes auftritt. Der Effekt einer Parallaxe ist beispielsweise auf Wikipedia ausführlich beschrieben (permanenter Link: https://de.wikipedia.org/w/index.php?title=Parallaxe&oldid=17 8305744).

Eine Anlage kann beispielsweise eine elektrische Anlage wie eine Oberleitung oder eine Freileitung sein. Es kann sich jedoch auch um eine Pipeline handeln. Ein Objekt kann beispielsweise ein Vogelnest, ein Auto oder einen Flugdrachen sein.

Gegenstand der Erfindung ist es, 3D Informationen in Verbindung mit 2D Detektionen im 3D Raum zu, um somit die Fehlalarmrate im Vergleich zu einfachen 2D Detektionen zu reduzieren.

Es ist ein Vorteil der Erfindung, dass die Häufigkeit von falsch positiv erkannten Objekten auf einer Anlage, d.h. eine Alarmrate, durch kombinierte Nutzung mehrerer Ansichten in einem vergleichsweise rechen- und speichereffizienten Verfahren verringert wird. Somit wird eine vergleichsweise zuverlässigere automatische Detektion von Objekten aus Luftbildern und eine deutliche Reduktion des Aufwandes für eine manuelle Nachbearbeitung erreicht. Auch Fehldetektionen, die nur in einem einzigen Bild einer Kamera auftauchen, können mit dem Verfahren sicher erkannt werden.

Erfindungsgemäß ist es möglich, sicher, schnell und automatisch zwischen Objekten auf einer Anlage - also erhöht über dem Erdboden - und Objekten unter der Anlage - also nahe dem Erdboden - zu unterscheiden. Dies ist ein Vorteil, weil Gefahren oder Schäden an einer Anlage wie z.B. einer Freileitung sofort durch Wartungstechniker beseitiget werden müssen. Wird ein Objekt wie z.B. ein Vogelnest oder ein Flugdrachen fälschlicherweise als auf der Leitung befindlich erkannt, so wird eine Abschaltung der Leitung und/oder eine Wartung unnötig ausgelöst, was Kosten verursacht und die Verfügbarkeit der Anlage vermindert.

Ferner ist es ein Vorteil der Erfindung, dass das beschriebene Verfahren vergleichsweise wenig rechenaufwändig ist. Da nur in den beiden zweidimensionalen Bildern Skalarwerte an den bekannten 3D Punkten - den Abschnitten der Anlage - ausgelesen werden müssen, ist der Speicher- bzw. Rechenbedarf vergleichsweise bedeutend kleiner als bei alternativen Verfahren.

In einer bevorzugten Ausführungsform des erfindungsgemäßen Verfahrens wird die dreidimensionale Darstellung mittels eines "light detection and ranging (LIDAR)" Sensors gewonnen und als dreidimensionale Punktewolke (PCD) erfasst. Dies ist ein Vorteil, weil mittels LIDAR hochgenaue Informationen zur Position von Objekten gewonnen werden können. In Verbindung mit der Position des Fluggeräts kann eine Verortung der Objekte im dreidimensionalen Raum stattfinden.

In einer weiteren bevorzugten Ausführungsform des erfindungsgemäßen Verfahrens wird die dreidimensionale Punktewolke (PCD) semantisch segmentiert, um in der dreidimensionalen Punktewolke (PCD) einen Suchraum für die Anlage einzuschränken. Dies ist ein Vorteil, weil die Objekterkennung auf den relevanten Bereich eingeschränkt wird, was den Rechenbedarf erheblich verringert und/oder die Geschwindigkeit der Berechnungen erhöht. Die Komplexität wird vermindert, weil der Suchraum auf relevante Szeneninhalte eingeschränkt werden. Wird an Bord des Fluggeräts die Auswertung durchgeführt, so kann bei dieser Ausführungsform Gewicht eingespart werden, weil eine weniger leistungsfähige Rechnereinrichtung benötigt wird. Ein typisches Beispiel sind LIDAR Daten einer Hochspannungsleitung, in der (automatisch) jene Punkte bestimmt werden, die zu den Freileitungen gehören bzw. durch das parametrische Modell einer Kettenlinie angenähert werden. Ein Beispiel für ein Verfahren zum Segmentieren von Bilddaten ist aus der Veröffentlichung "Mask R-CNN" von Kaiming He et al. bekannt.

Auf diesen eingeschränkten Suchraum wird ein klassischer 2D Detektor angewandt, der etwa auf bestimmte Störfallklassen vortrainiert wird. Alternativ wird im Sinne einer Anomaliedetektion automatisch ein Modell der Norm der Leiterregion bestimmt (z.B. mittels Autoencodern) und Ausreißer werden detektiert. Beide Ansätze bestimmen im Ergebnis eine Wahrscheinlichkeit für potentielle detektionsrelevante Zustände einzelner Pixel oder Bildbereiche. Dabei kann in einer Variante der Bildraum dabei nicht nur auf das sichtbare Licht eingeschränkt sein, sondern sich auch auf angrenzende spektrale Bereich wie (thermisches) Infrarot und das ultraviolette Licht erstrecken.

In einer Weiterbildung der vorgenannten Ausführungsform ist es vorgesehen, für jeden 3D Punkt der Anlage die Detektionsantworten bzw. Pixelfarbwerte in den Einzelbildern abzufragen, und eine Konsolidierung dieser Einzeldetektionen vorzunehmen. Als Konsolidierungsfunktion kann dabei einer der folgenden linearen oder nichtlineare mathematischen Ansätze verfolgt werden: Extremwertbestimmung (Minimum/Maximum), Medianbestimmung, Mittelwertbestimmung, andere robuste Statistiken wie z.B. mittels Quantilen.

Es können folgende Verfahrensschritte durchgeführt werden:
- Als INPUT werden 3D Punktwolken und dazu hochgenau örtlich registrierte Bildaufnahmen gewonnen;
- Optional wird die 3D Punktwolke semantisch segmentiert (Optional, da auch die gesamte PCD semantisch für die Inspektionsaufgabe relevant sein kann);
- Die nach Segmentierung verbleibenden 3D Punkte werden in die 2D Bilder projiziert;
- An den resultierenden Stellen im 2D Bild werden Detektionsergebnisse entweder selektiv generiert oder die vorhandenen Detektionsergebnisse ausgelesen (Letzteres falls die Detektion im Bildraum flächendeckend erfolgt ist);
- Für jeden 3D Punkt werden die assoziierten Einzeldetektionen im Bildraum durch eine Konsolidierungsfunktion auf Konsistenz hin überprüft;
- Optional können die verbleibenden 3D Punkte wiederum in den Bildraum zurückprojiziert werden und ergeben somit das finale Detektionsergebnis im Bildraum.

In einer weiteren bevorzugten Ausführungsform des erfindungsgemäßen Verfahrens wird als Anlage eine Freileitung verwendet, und die semantische Segmentierung wird durchgeführt, indem ein Modell einer Kettenlinie zur Erkennung von Leiterseilen der Freileitung eingesetzt wird. Dies ist ein Vorteil, weil auf einfache Weise der Suchraum eingeschränkt werden kann.

In einer weiteren bevorzugten Ausführungsform des erfindungsgemäßen Verfahrens werden die Position und Ausrichtung der Darstellung mittels einer Positionsbestimmungseinrichtung festgestellt. Dies kann beispielsweise mittels eines Empfängers für "Global Positioning System (GPS)" Signale erfolgen, wobei die Ausrichtung von der Blickrichtung der Sensoranordnung (LIDAR oder Kamera) abhängt. Die Blickrichtung kann z.B. mittels eines Neigungssensors in Verbindung mit einem Kompass festgestellt werden, die im Fluggerät vorgesehen werden.

In einer weiteren bevorzugten Ausführungsform des erfindungsgemäßen Verfahrens werden die Bilder mittels einer Kamera für sichtbares Licht aufgenommen. Das für Menschen sichtbare Licht wird üblicherweise mit Wellenlängen zwischen 380 nm bis 780nm angegeben (permanenter Link: https://de.wikipedia.org/w/index.php?title=Elektromagnetische s_Spektrum&oldid=178702023).

In einer Weiterbildung der vorgenannten Ausführungsform werden zur Verbesserung der Zuverlässigkeit weitere Kameras eingesetzt. Beispielsweise können mehrere Kameras redundant oder mit unterschiedlichen Vergrößerungen bzw. Detailauflösungen eingesetzt werden. Dies ist ein Vorteil, weil die Wahrscheinlichkeit erhöht wird, bereits bei einem einzigen Überflug der Anlage alle benötigten Bilddaten gewinnen zu können.

In einer weiteren bevorzugten Ausführungsform des erfindungsgemäßen Verfahrens wird die Kamera mit einem Fluggerät entlang der Anlage geführt, um an den beiden unterschiedlichen Positionen das erste und das zweite Bild aufzunehmen.

In einer weiteren bevorzugten Ausführungsform des erfindungsgemäßen Verfahrens wird die dreidimensionale Darstellung der Anlage jeweils in die beiden Bilder projiziert, um die Abschnitte jeweils festzulegen.

In einer weiteren bevorzugten Ausführungsform des erfindungsgemäßen Verfahrens wird die Auswertungseinrichtung im Fluggerät vorgesehen. Dies ist ein Vorteil, weil direkt während eines Überfluges eine Auswertung und Objekterkennung stattfinden kann. Die Bilder und Koordinaten der erkannten Objekte können abgespeichert und nach Ende des Fluges an den Betreiber der Anlage übermittelt werden. Alternativ kann mittels einer Datenkommunikation per Funk schon während des Fluges eine Übermittelung der erkannten Objekte erfolgen.

In einer weiteren bevorzugten Ausführungsform des erfindungsgemäßen Verfahrens wird die Auswertungseinrichtung als ein zentraler Server vorgesehen. Dies ist ein Vorteil, weil Gewicht und Bauraum im Fluggerät eingespart wird. Es können beispielsweise alle durch die Kamera und das LIDAR erfassten Daten auf einem Datenspeicher zwischengespeichert und nach Ende des Fluges zur Auswertung an die Auswertungseinrichtung übermittelt werden. Alternativ kann mittels einer Datenkommunikation per Funk schon während des Fluges eine Übermittelung der Daten an die Auswertungseinrichtung erfolgen.

Ferner stellt sich an die Erfindung die Aufgabe, eine Anordnung anzugeben, mit der Objekte an Anlagen automatisch und zuverlässig erkennbar sind.

Die Erfindung löst diese Aufgabe mit einer Anordnung gemäß Anspruch 10. Bevorzugte Ausführungsformen ergeben sich aus den Ansprüchen 11 bis 15. Es ergeben sich für die erfindungsgemäße Anordnung und ihre Ausführungsformen sinngemäß die gleichen Vorteile wie eingangs für das erfindungsgemäße Verfahren erläutert.

Zur besseren Erläuterung der Erfindung zeigen in schematischer Darstellung die
- Figur 1: ein Beispiel für eine semantische Segmentierung von LIDAR-Bilddaten, und
- Figur 2: ein Beispiel für Bilder einer Freileitung in verschiedenen Frequenzbereichen, und
- Figur 3: ein Beispiel für eine Anomalieerkennung von Objekten an einer Freileitung, und
- Figur 4: ein Beispiel für eine Erkennung der Position von Objekten an einer Freileitung durch den Parallaxeneffekt.

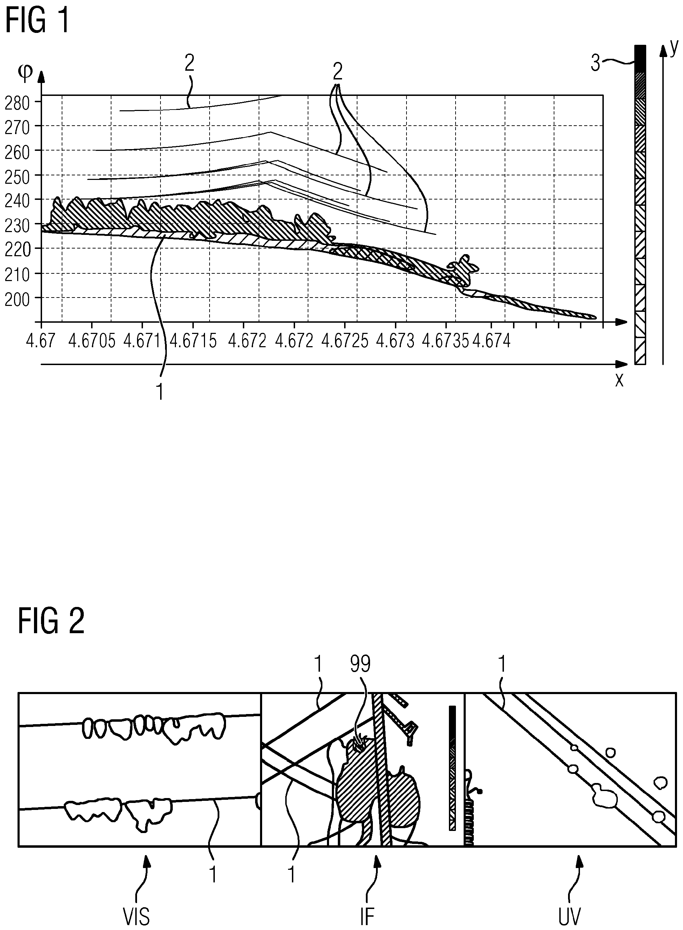

Figur 1 zeigt ein Beispiel für eine semantische Segmentierung von LIDAR-Bilddaten. Es ist der Blickwinkel ϕ des LIDAR gegenüber der Ortskoordinate x dargestellt. Auf einer Farbskala 3 ist abgebildet, wie stark die LIDAR-Signale empfangen wurden. Erkennbar ist, dass nach einer erfolgreichen Segmentierung des Freileitungskabels mittels einer Modells einer Kettenfunktion die Leitung 1 hervorgehoben ist. Die weiteren Leitungen 2 bleiben im Hintergrund.

Figur 2 zeigt ein Beispiel für Bilder einer Freileitung in verschiedenen Frequenzbereichen. Von links nach rechts ist jeweils ein Bild im sichtbaren Frequenzbereich (VIS), im Infraroten Frequenzbereich (IF) und im ultravioletten Frequenzbereich (UV) dargestellt. Im sichtbaren Freqenzbereich (VIS) zeigen sich auf den Leitungen 1 Vogelnester. Im Infrarotbereich (IF) zeigt sich ein besonders erhitzter Bereich 99 eines Isolators an einem Mast. Im UV-Bereich (UV) sind deutlich Koronaentladungen an den Leitungen 1 zu erkennen.

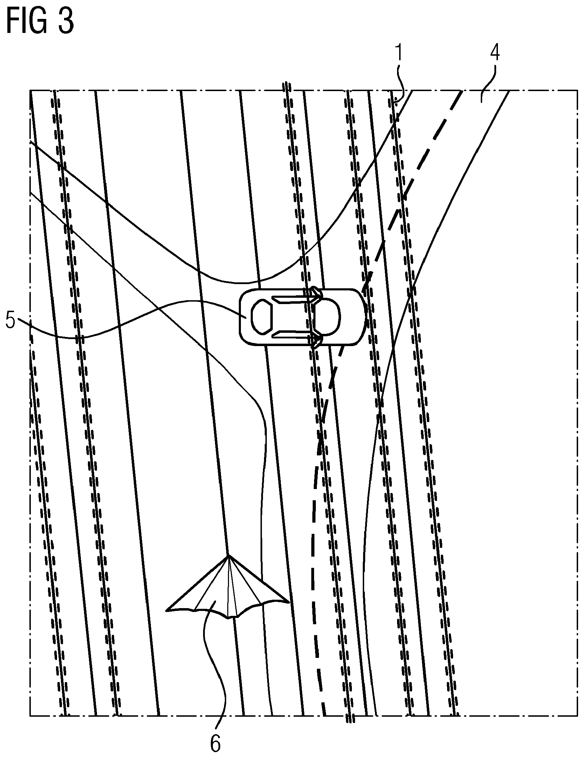

Figur 3 zeigt ein Beispiel für eine Anomalieerkennung von künstlich eingefügten Objekten an einer Freileitung. Das Bild ist von oben bei einem Überflug aufgenommen. Dabei verlaufen Leitungskabel 1 über Waldstücken und einer Straße 4, die sich im oberen Teil des Bildes gabelt. Auf der Straße 4 steht ein Auto 5. An einem der Leiterseile ist ein Drachen 6 angeordnet. In dem Bild sind vom Auswertungsalgorithmus korrekt beide Objekte als abweichend vom erwarteten Verlauf von Leiterseilen gekennzeichnet. Ohne Weiteres kann der Algorithmus die Tiefeninformation aber nicht gewinnen, d.h. er kann nicht entscheiden, ob das Auto und insbesondere ob der Flugdrachen auf der Leitung oder darunter am Erdboden befindlich ist.

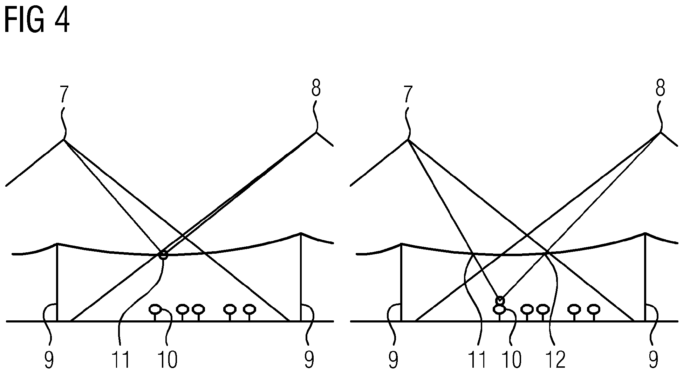

Um Objekte am Boden von Objekten auf der Leitung zu unterscheiden, schlägt die Erfindung eine Ausnutzung des Parallaxeneffekts vor. Figur 4 zeigt nebeneinander zwei Szenen. Es tragen jeweils zwei Masten 9 eine Freileitung. Unterhalb der Freileitung sind Bäume 10 zu sehen. Es werden ein erstes und ein zweites Bild an zwei unterschiedlichen Positionen 7,8 während eines Überfluges der Leitung aufgenommen.

Im linken Bild ist erkennbar, dass bei Ausrichtung beider Blickrichtungen für die beiden Bilder auf einen Punkt 11 auf der zuvor durch Segmentierung im 3D-Raum erkannten Freileitung beide Bilder einen Abschnitt 11 der Leitung im Sehstrahl anvisieren. Ist ein Objekt direkt auf bzw. an der Leitung angeordnet, so erscheint das Objekt aus beiden Perspektiven am selben Ort auf der Leitung. Anders ist es im rechten Bild bei dem Baum 10. Der Baum 10 erscheint auf den beiden Bildern nicht an dem selben Ort auf der Leitung, sondern aufgrund des Parallaxeneffekts aus der Blickrichtung 7 an dem Abschnitt 11 und aus der Blickrichtung 8 an dem Abschnitt 12 der Leitung. Dies bedeutet, dass der Baum 10 nicht auf gleicher Höhe wie die Leitung, sondern vielmehr darunter, angeordnet sein muss. Dieses Prinzip ermöglicht eine einfache automatisierte Unterscheidung zwischen an bzw. auf einer Anlage angeordneten Objekten und am Erdboden angeordneten Objekten.

## Patentansprüche

1. Verfahren zum Erkennen von Objekten (5,6) an Anlagen 1), mit den Schritten:
- Bereitstellen einer dreidimensionalen Darstellung der Anlage, wobei die Position und Ausrichtung der Darstellung und der Anlage bekannt sind, und
- Erfassen eines ersten Bildes und eines zweiten Bildes der Anlage, wobei die beiden Bilder von unterschiedlichen Positionen (7,8) oberhalb der Anlage (1) aufgenommen werden, **dadurch gekennzeichnet, dass**
für eine Vielzahl von Abschnitten der Anlage (1) unter Ausnutzung eines Parallaxeneffekts jeweils ein Vergleich des ersten und des zweiten Bildes durchgeführt wird, wobei für den Fall einer Übereinstimmung der Bilder in einem die Anlage umgebenden Bereich ein Objekt (5) an der Anlage (1) erkannt wird.

2. Verfahren nach Anspruch 1, **dadurch gekennzeichnet, dass** die dreidimensionale Darstellung mittels eines "light detection and ranging (LIDAR)" Sensors gewonnen und als dreidimensionale Punktewolke (PCD) erfasst wird.

3. Verfahren nach Anspruch 2, **dadurch gekennzeichnet, dass** die dreidimensionale Punktewolke (PCD) semantisch segmentiert wird, um in der dreidimensionalen Punktewolke (PCD) einen Suchraum für die Anlage einzuschränken.

4. Verfahren nach Anspruch 3, **dadurch gekennzeichnet, dass** als Anlage eine Freileitung verwendet wird, und dass die semantische Segmentierung durchgeführt wird, indem ein Modell einer Kettenlinie zur Erkennung von Leiterseilen (1) der Freileitung eingesetzt wird.

5. Verfahren nach einem der vorhergehenden Ansprüche, **dadurch gekennzeichnet, dass** die Position und Ausrichtung der Darstellung mittels einer Positionsbestimmungseinrichtung festgestellt werden.

6. Verfahren nach einem der vorhergehenden Ansprüche, **dadurch gekennzeichnet, dass** die Bilder mittels einer Kamera für sichtbares Licht aufgenommen werden.

7. Verfahren nach Anspruch 6, **dadurch gekennzeichnet, dass** die Kamera mit einem Fluggerät entlang der Anlage geführt wird, um an den beiden unterschiedlichen Positionen (7,8) das erste und das zweite Bild aufzunehmen.

8. Verfahren nach einem der vorhergehenden Ansprüche, **dadurch gekennzeichnet, dass** die dreidimensionale Darstellung der Anlage (1) jeweils in die beiden Bilder projiziert wird, um die Abschnitte jeweils festzulegen.

9. Anordnung zum Erkennen von Objekten (5,6) an Anlagen (1), aufweisend:
- ein Fluggerät mit einem "light detection and ranging (LIDAR)" Sensor zur Erfassung einer dreidimensionalen Darstellung der Anlage, und
- mit einer Positionsbestimmungseinrichtung zur Erfassung der Position und Ausrichtung der dreidimensionalen Darstellung der Anlage, und
- mit einer Kamera für sichtbares Licht, die zum Erfassen eines ersten Bildes und eines zweiten Bildes der Anlage ausgebildet ist, wobei die beiden Bilder von unterschiedlichen Positionen (7,8) oberhalb der Anlage (1) aufgenommen werden,
**dadurch gekennzeichnet, dass**
eine Auswertungseinrichtung ausgebildet ist, für eine Vielzahl von Abschnitten der Anlage unter Ausnutzung eines Parallaxeneffekts jeweils ein Vergleich des ersten und des zweiten Bildes durchzuführen, wobei für den Fall einer Übereinstimmung der Bilder in einem die Anlage (1) umgebenden Bereich ein Objekt an der Anlage (1) erkannt wird.

10. Anordnung nach Anspruch 9, **dadurch gekennzeichnet, dass** der "light detection and ranging (LIDAR)" Sensor ausgebildet ist, die dreidimensionale Darstellung als dreidimensionale Punktewolke (PCD) zu erfassen, und dass
die Auswertungseinrichtung ausgebildet ist, die dreidimensionale Punktewolke (PCD) semantisch zu segmentieren, um in der dreidimensionalen Punktewolke (PCD) einen Suchraum für die Anlage (1) einzuschränken.

11. Anordnung nach Anspruch 9 oder 10, **dadurch gekennzeichnet, dass** die Anlage eine Freileitung aufweist, und dass die Auswertungseinrichtung ausgebildet ist, die semantische Segmentierung durchzuführen, indem ein Modell einer Kettenlinie zur Erkennung von Leiterseilen (1) der Freileitung eingesetzt wird.

12. Anordnung nach einem der Ansprüche 9 bis 11, **dadurch gekennzeichnet, dass** die Auswertungseinrichtung ausgebildet ist, die dreidimensionale Darstellung der Anlage (1) jeweils in die beiden Bilder zu projizieren, um die Abschnitte jeweils festzulegen.

13. Anordnung nach einem der Ansprüche 9 bis 11, **dadurch gekennzeichnet, dass** das Fluggerät ein Flugzeug, ein Helikopter oder eine Drohne ist.

14. Anordnung nach einem der Ansprüche 9 bis 13, **dadurch gekennzeichnet, dass** die Auswertungseinrichtung im Fluggerät vorgesehen ist.

15. Anordnung nach einem der Ansprüche 9 bis 14, **dadurch gekennzeichnet, dass** die Auswertungseinrichtung als ein zentraler Server vorgesehen ist.
